# FASCICULE DE BREVET EUROPEEN

(11) **EP 0 385 089 B1**
(45) Date de publication et mention de la délivrance du brevet: **24.05.1995**
(21) Numéro de dépôt: 90101206.2
(22) Date de dépôt: 22.01.1990
(51) Int. Cl.: B01D 29/31, B01D 63/06, B01J 35/04

(54) **Procédé d'assemblage dans un module d'un élément rigide à membrane de séparation, de filtration, ou de transformation catalytique**
Verfahren zum Einsetzen eines starren Elements zur Membrantrennung, Filtration oder katalytischen Umwandlung in ein Modul
Method for the installation in a module of a rigid element for membrane separation, filtration or catalytic conversion

(30) Priorité: 27.01.1989 FR 8901028
(43) Date de publication de la demande: 05.09.1990
(73) Titulaire: SOCIETE DES CERAMIQUES TECHNIQUES, 65460 Bazet (FR)
(72) Inventeur: Garcera, Daniel, F-65000 Tarbes (FR); Gillot, Jacques, F-65310 Laloubere (FR)
(74) Mandataire: Weinmiller, Jürgen

(56) Documents cités:
- EP-A- 0 039 587
- EP-A- 0 092 839
- EP-A- 0 176 739
- EP-A- 0 270 051
- AT-B- 208 362
- AT-B- 208 363
- AT-B- 271 401
- DE-A- 2 019 329
- DE-A- 2 263 554
- FR-A- 2 331 534

## Description

La présente invention concerne un procédé d'assemblage dans un module d'un élément rigide à membrane de séparation, de filtration, ou de transformation catalytique ; un tel élément, dit élément actif, de forme extérieure sensiblement cylindrique ou prismatique est constitué d'un matériau rigide tel qu'une céramique, un verre, un métal ou du carbone.
Un module comporte schématiquement une enveloppe, en général cylindrique, constituée d'un métal ou d'une matière plastique renforcée ou non de fibres, dans laquelle est assemblée une pluralité d'éléments actifs parallèles les uns aux autres et à l'axe de l'enveloppe. Deux plaques d'extrémité très rigides supportent mécaniquement les éléments actifs à leurs deux extrémités et les maintiennent en position avec des joints intermédiaires. Par ailleurs les deux plaques séparent dans l'installation de traitement de fluide une région amont et une région aval par rapport à la membrane ; elles assurent l'étanchéité entre ces deux régions.

Un élément actif comprend en général trois parties :
- Un support à porosité grossière, très perméable, qui donne à l'élément actif sa forme et sa solidité. Il est en général constitué d'un matériau fritté poreux.
- Une couche active très mince déposée sur la surface du support qui assure la fonction de séparation, filtration ou transformation catalytique. Cette couche active recouvre la surface intérieure du ou des canaux de ces éléments actifs, ou dans certains cas la surface extérieure, quand il s'agit de tubes ; elle peut être déposée sur le support, ou sur une ou plusieurs sous-couches déposées elles-mêmes sur le support.
- Un "étanchage" qui remplit la porosité de chaque extrémité du support, de façon à empêcher une communication entre les régions amont et aval du module par l'intermédiaire de la porosité grossière du support, dans le cas où la couche active ne recouvre pas toute la surface de l'extrémité du support. A titre d'exemple, ce peut être un étanchage tel que décrit dans FR-A-2 560 526.

Des éléments actifs de type "multicanal" sont décrits notamment dans les publications suivantes :
J. GILLOT, D. GARCERA -
"Nouveaux Media Filtrants Céramiques pour Microfiltration Tangentielle set Ultrafiltration" - Conférence FILTRA 84 Sté Française de Filtration Oct. 84 PARIS.
J. GILLOT, G. BRINKMAN, D. GARCERA -
"New Ceramic Filter Media for Crossflow Microfiltration and Ultrafiltration"
Fourth World Filtration Congress 22-24 April 1986 - OSTENDE Belgium.

Comme les supports sont produits par extrusion, séchage puis frittage, leurs extrémités présentent des formes irrégulières à cause des déformations qui surviennent lors de l'extrusion, puis du frittage (flexion sous l'effet de la pesanteur, retrait à divers stades, etc,..). Il est donc difficile d'assembler l'élément dans la plaque d'extrémité en utilisant un joint standard de forme géométriquement bien définie, tel que par exemple un joint torique. En effet, l'écartement entre les surfaces en regard - extrémité du support d'une part, surface de la plaque d'extrémité d'autre part - entre lesquelles doit se loger le joint est beaucoup trop variable d'un point à un autre de ces surfaces en regard.

On peut chercher à résoudre ce problème en usinant le support à chaque extrémité pour lui donner une forme de révolution. Mais ceci conduit à diminuer l'épaisseur de la "peau", c'est-à-dire la distance entre les canaux extérieurs et la surface extérieure du support.

La présente invention a pour but d'éviter ces inconvénients et de mettre en oeuvre un procédé de montage permettant d'assurer un assemblage plus aisé de l'ensemble des éléments actifs dans les plaques d'extrémité du module, avec une étanchéité optimale.

La présente invention a pour objet un procédé d'assemblage dans un module d'un élément rigide à membrane de séparation, de filtration ou de transformation catalytique, de forme extérieure sensiblement cylindrique ou prismatique, procédé selon lequel on réalise ledit élément à partir d'un support en matériau fritté, dont on étanche les extrémités et sur lequel on dépose une couche active, ledit module étant destiné à contenir au moins un élément rigide dans une enveloppe sensiblement cylindrique d'axe parallèle audit élément rigide et fermée par deux plaques d'extrémité présentant des ouvertures où l'on fixe avec des joints intermédiaires les extrémités dudit élément caractérisé par le fait que l'on dépose en outre sur lesdites extrémités dudit élément une surépaisseur ayant une bonne liaison avec ledit support et que l'on usine ladite surépaisseur de manière à réaliser un épaulement dont la surface extérieure a une géométrie de révolution prédéterminée, d'axe identique à ou voisin de celui dudit élément.

Selon une forme d'exécution de la présente invention, ledit élément rigide à membrane de séparation, de filtration ou de transformation catalytique est de forme extérieure sensiblement prismatique et l'épaulement a une surface extérieure cylindrique.

L'assemblage de ladite extrémité dans ladite ouverture correspondante de la plaque d'extrémité au moyen d'un joint prévu à l'avance, tel qu'un joint torique, cylindrique, plat, conique ou autre, est alors facile à réaliser.

Selon une variante, on réalise le joint en rapportant un embout brasé, puis on soude ou brase la périphérie de cet embout sur la plaque d'extrémité. On obtient ainsi une fixation de l'élément actif sur la plaque d'extrémité capable de résister à des températures élevées. Pour de telles applications un soufflet métallique peut être incorporé dans l'embout ou lui être associé.

La matière de l'épaulement et celle du support sont choisies parmi une céramique, un verre, un métal, un carbone.

L'épaulement est avantageusement constitué du même matériau que la partie support de l'élément actif, par exemple en alumine dans le cas d'un support en alumine ou en acier inoxydable fritté dans le cas d'un support en acier inoxydable ou encore en verre poreux fritté dans le cas d'un support en verre poreux. Ceci assure une bonne liaison par frittage entre le support et l'épaulement et évite tout problème de dilatation différentielle. Mais on peut avoir aussi un épaulement en céramique sur un support en verre et un épaulement en verre sur un support en céramique.

Ce peut être aussi du carbone dans le cas d'un support en carbone poreux. On dépose alors sur le support une surépaisseur constituée d'un mélange de particules de carbone et d'un liant carbonisable comme le brai de houille, ou une résine phénolique et on carbonise le liant en atmosphère non oxydante pour obtenir un épaulement en carbone, poreux ou non.

Mais l'épaulement peut être aussi constitué de toute matière qui a une bonne liaison avec un support en céramique, en verre, en métal, en carbone, par exemple un polymère. On coule alors une résine, par exemple époxyde contenant ou non une charge minérale, autour de l'extrémité de l'élément de façon à ce que cette résine constitue la surépaisseur et imprègne la porosité de l'extrémité du support.

L'opération de dépose de la matière constituant la surépaisseur peut se faire de diverses manières, par coulage, par moulage, ou par pulvérisation.
Par coulage on part d'une barbotine ou suspension contenant :
- pour un support en céramique ou en verre :
   . une poudre de céramique ou de verre,
   . un liant organique assurant la cohésion à sec,
   . un solvant du liant (en général de l'eau).
- pour un support en carbone :
   . une poudre de carbone,
   . une matière organique carbonisable (brai, résine phénolique, etc,...) liquide ou en solution dans un solvant.
- pour un support en métal :
   . une poudre de métal,
   . un liquide de mise en suspension.
Par moulage autour de l'extrémité de l'élément actif, on part d'une masse plastique ayant une composition semblable à celle indiquée ci-dessus pour le coulage, mais moins riche en liquide.
Par pulvérisation (projection au pistolet) on part d'une barbotine semblable aux barbotines de coulage indiquées ci-dessus.

Dans les trois procédés ci-dessus on consolide ensuite la surépaisseur par séchage et frittage, ou par chauffage entre 800°C et 1500°C en atmosphère non oxydante dans le cas de la matière carbonisable.

On peut aussi déposer la matière constituant la surépaisseur, par moulage autour de l'extrémité de l'élément actif d'une masse plastique contenant une matière plastique polymérisable et une charge minérale. Par exemple dans le cas d'un support en alumine poreuse, cette masse plastique peut être constituée d'un mélange de résine époxyde et de poudre d'alumine. On consolide ensuite la surépaisseur par polymérisation.

On peut enfin opérer par projection à la flamme ou au plasma de matière fondue (céramique, verre, métal).

Selon un mode de réalisation préférentiel, la réalisation d'un élément actif comporte les phases suivantes :
- On extrude la matière à fritter, qui constituera le support.
- On la sèche, et éventuellement on lui fait subir une première cuisson.
- On dépose alors sur la surface latérale extérieure du support, sur une petite longueur à l'extrémité de ce support et tout autour du support, une surépaisseur de matière frittable, ou en partie carbonisable, que l'on appellera épaulement.
- On sèche ce dépôt et on le consolide par frittage, ou par carbonisation dans le cas d'un liant carbonisable. Ce frittage ou cette carbonisation peuvent être réalisés dans la même opération de cuisson que le frittage du support. Le support et la surépaisseur ont alors une surface extérieure de forme irrégulière.
- On usine par exemple par tournage, meulage, etc... la surface extérieure de la surépaisseur portée par chaque extrémité pour former un épaulement.
- On étanche l'extrémité du support avec son épaulement. Suivant le type d'étanchage utilisé, cette opération peut être réalisée avant l'usinage de l'épaulement ou après. Dans ce dernier cas, il faut utiliser un type d'étanchage qui ne forme sur la surface de l'épaulement qu'une couche d'épaisseur négligeable, ou du moins très régulière, afin de ne pas détruire la régularité de la forme de la surface extérieure de l'épaulement.
- On dépose la couche active. Cette opération peut toutefois être réalisée suivant les cas avant ou après l'opération d'étanchage.

Le procédé d'assemblage selon l'invention présente notamment les avantages suivants :
- L'épaulement ne nécessite qu'un faible supplément de matière par rapport à l'élément tel qu'extrudé et fritté.
- La réalisation de l'épaulement n'entraîne qu'un faible supplément de coût. En effet, dans le cas où la partie support de l'élément actif est frittée en deux opérations de cuisson à températures différentes, la surépaisseur peut être déposée après la première cuisson, puis frittée lors de la deuxième cuisson.
- Dans le cas d'un support à géométrie multicanal, il est souvent avantageux de donner à ce support la forme d'un prisme hexagonal contenant par exemple 7, 19 ou 37 canaux disposés selon un arrangement compact et régulier. Il est alors difficile de réaliser l'assemblage au moyen de joints préformés tels que des joints toriques ou au moyen d'un presse-étoupe. L'épaulement permet d'utiliser de tels joints.

D'autres caractéristiques et avantages de la présente invention apparaîtront au cours de la description suivante, donnée à titre illustratif mais nullement limitatif. Dans le dessin annexé :
- La figure 1 est une vue schématique en bout d'un support hexagonal d'élément actif, "multicanal" à dix neuf canaux, avant dépose de l'épaulement.
- La figure 2 montre schématiquement en coupe longitudinale la phase de dépose de la surépaisseur sur une extrémité du support de la figure 1.
- La figure 3 est une vue analogue à celle de la figure 1, mais montre le support muni de sa surépaisseur selon l'invention.
- La figure 4 est une vue analogue à celle de la figure 3 et montrant le support avec son épaulement après usinage selon l'invention.
- La figure 5 est une vue schématique en coupe longitudinale d'un module 11 selon l'invention.
- La figure 6 est une vue schématique agrandie d'une extrémité d'élément actif dans un module selon l'invention.
- Les figures 7 et 8 sont des variantes de réalisation de la disposition de la figure 6 avec divers types de joints.
- La figure 9 est une vue analogue à celle de la figure 6, avec une disposition mettant en oeuvre un joint presse-étoupe, c'est-à-dire un joint dont l'étanchéité est réalisée par une matière déformable constituée au moins en partie de fibres, et qui est comprimée entre ou contre les deux pièces entre lesquelles on veut réaliser l'étanchéité.
- La figure 10 est une variante de réalisation d'une extrémité d'élément selon l'invention avec un embout brasé.
- La figure 11 est une variante de réalisation d'une extrémité d'élément selon l'invention avec un embout faisant soufflet.
- La figure 12 montre une autre variante de réalisation d'une extrémité d'élément selon l'invention avec un embout faisant soufflet.

### EXEMPLE I

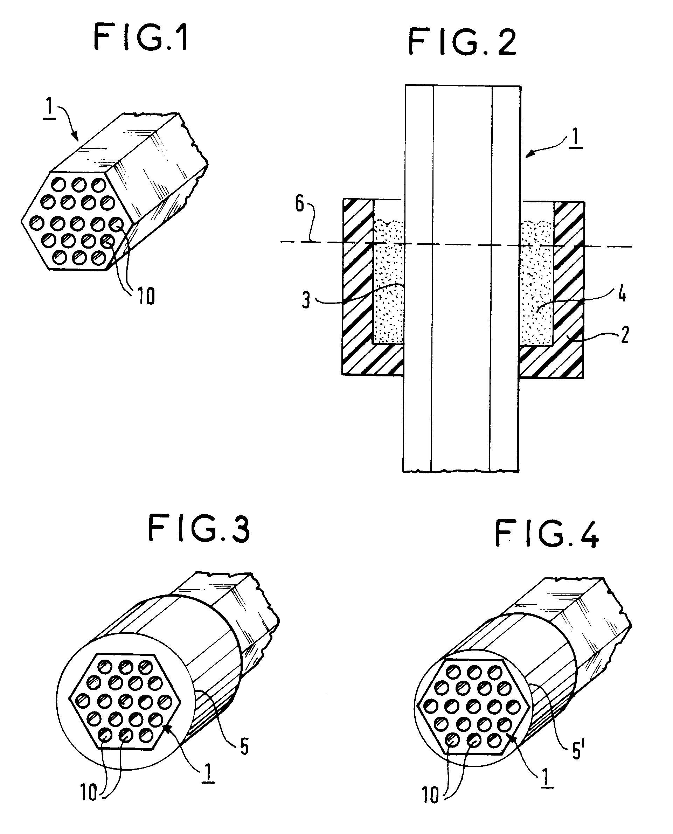

On part d'un support "multicanal" en alumine 1 à dix neuf canaux 10 dont on voit une extrémité dans la figure 1.

Après frittage définitif il a la forme d'un prisme hexagonal de longueur 850 mm et de largeur entre plats d'environ 28 mm ; les angles de l'hexagone sont arrondis, avec une dimension transversale maximale (distance entre sommets) de 30 mm. Il est constitué d'alumine poreuse ayant un diamètre de pores de 12 »m et une porosité de 35 % en volume. Il présente les imperfections de formes suivantes :
. la distance entre les faces opposées du prisme hexagonal, au niveau des extrémités des éléments, varie entre 27 et 29 mm.
. L'une des extrémités du multicanal n'est pas parfaitement rectiligne mais légèrement courbée (défaut de crosse). A cette extrémité, l'angle que forme l'axe du prisme hexagonal avec l'axe moyen déterminé sur l'ensemble de la longueur de l'élément varie entre 1 et 2°, suivant les éléments.

Pour réaliser la surépaisseur, on prépare une barbotine de composition pondérale suivante :

| | |
|---|---|
| . alumine de dimension moyenne de grains 13 »m | 15 % |
| . alumine de dimension moyenne de grains 30 »m | 45 % |
| . alumine de dimension moyenne de grains 2,5 »m | 20 % |
| . eau | 18 % |
| . suspension concentrée d'un latex d'acétate de vinyle | 1,96 % |
| . tensio actif Darvan C (de la Société VANDERBILT) | 0,04 % |

Pour déposer la surépaisseur on place le support, qui a déjà subi une première cuisson, en position verticale en enserrant son extrémité dans un moule 2 en caoutchouc qui s'adapte à la forme irrégulière de l'extrémité 3 (voir figure 2). On coule la barbotine dans l'espace entre le support et le moule. Le liquide de la barbotine est aspiré par capillarité dans la porosité du support poreux 1, et il se forme un gâteau 4 que l'on sèche. On démoule. Le gâteau est adhérent au support 1. On procède de la même manière à l'autre extrémité du support 1. On effectue le frittage définitif du support et de la surépaisseur 5 par cuisson à 1750°C. La surépaisseur ainsi réalisée est poreuse, très solide, et très bien liée au support.

On tronçonne suivant un plan 6 perpendiculaire à l'axe du support dont la position est visible dans la figure 2.

On usine alors par meulage la surface extérieure de la surépaisseur 5 (voir figure 3) de façon à lui conférer une forme 5' cylindrique (voir figure 4) ou éventuellement cylindroconique. On obtient alors un épaulement parfaitement dimensionné, de diamètre extérieur 34 mm et de longueur 18 mm.

On étanche l'extrémité par imprégnation par un verre qui, en fondant, pénètre en totalité dans la porosité du support de façon à ne pas laisser de couche supplémentaire sur la surface de l'épaulement 5'. On dépose la couche active sur la surface intérieure des canaux.

On obtient ainsi un élément actif dont l'extrémité, de forme géométriquement bien définie, est bien adaptée au montage en module au moyen de joints toriques ou de presse-étoupe.

### EXEMPLE II

On applique le procédé selon l'invention à un support en verre poreux a diamètre de pores 10 »m qui est un tube dont la forme est voisine d'un cylindre, de diamètre intérieur 15 mm environ, de diamètre extérieur 19 mm environ, de longueur 500 mm, et qui a été obtenu par frittage de poudre de verre.

Ce tube présente les imperfections de forme suivantes :
. Le périmètre extérieur de la section de chaque extrémité est voisin d'une ellipse presque circulaire (défaut d'ovalisation) dont les grands axes sont :

| | |
|---|---|
| - à une extrémité A : | 18,3 mm et 18,9 mm |
| - à l'autre extrémité B : | 18,7 mm et 19,7 mm |

. Le diamètre extérieur moyen est donc de 18,6 mm à l'extrémité A et 19,2 mm à l'extrèmité B (défaut de conicité).

On prépare une barbotine ayant la composition pondérale suivante :

| | |
|---|---|
| - poudre de verre de dimension moyenne de grains 8 »m | 24 % |
| - poudre de verre de dimension moyenne de grains 20 »m | 44 % |
| - eau | 30 % |
| - alcool polyvinylique | 2 % |

On choisit pour la poudre de verre une composition donnant le même coefficient de dilatation que le verre constituant le tube, mais avec un point de ramollissement inférieur de 50°C.

Au moyen de cette barbotine, on dépose comme dans l'exemple I une surépaisseur autour de chaque extrémité du tube. On consolide cette surépaisseur par un traitement thermique à une température de 50°C inférieure à celle utilisée pour fabriquer le tube.

On usine ensuite ces surépaisseurs par meulage de façon à obtenir un épaulement de diamètre extérieur 22 mm et de longueur 10 mm. Après dépose éventuelle sur la surface intérieure du tube d'une couche filtrante à diamètre de pores inférieur à celui du support, et étanchage de la porosité des extrémités du support, on obtient un élément actif qui peut être monté en module au moyen de joints toriques ou de presse-étoupe.

### EXEMPLE III :

On applique le procédé selon l'invention à un support en acier inoxydable fritté poreux d'un diamètre de pores moyen de 15 »m, qui est un tube de longeur 1000 mm, de diamètre intérieur 18 mm environ, de diamètre extérieur 24 mm environ, ce dernier fluctuant entre 23,5 mm et 24,5 mm (défaut d'ovalisation).

Pour réaliser un épaulement sur ce support on prépare une barbotine de composition pondérale suivante :

| | |
|---|---|
| - poudre d'acier inoxydable de même composition que le tube et de diamètre moyen de particules 15 »m | 85 % |
| - Eau | 14,5 % |
| - alcool polyvinylique | 0,5 % |

Par projection au pistolet de cette barbotine, on dépose sur chaque extrémité du tube une surépaisseur de poudre d'acier inoxydable. Au moyen de caches délimitant la zone de projection, on limite à 20 mm la longueur de la surépaisseur. On consolide la matière déposée par un frittage à la même température que celle du frittage du tube.

On usine ensuite chaque extrémité par tournage de façon à obtenir un épaulement de diamètre extérieur 27 mm et de longueur 20 mm.

On étanche la porosité des extrémités du tube par infiltration d'une brasure ; on dépose sur la surface intérieure du tube une mince couche de poudre d'acier inoxydable et on fritte de manière à obtenir une couche séparatrice de diamètre de pores 1 »m.

On obtient ainsi un élément actif qu'on peut assembler en module au moyen de joints du type presse-étoupe.

### EXEMPLE IV :

On applique le procédé selon l'invention à un support en carbone. On veut réaliser un épaulement sur un support en carbone poreux, d'un diamètre de pores moyen 10 »m, de forme voisine d'un cylindre de longueur 600 mm, et qui est percé de 7 canaux parallèles de diamètre 5 mm (élément de type multicanal) Son diamètre fluctue entre 21,5 mm et 22,5 mm.

Pour cela, on prépare un mélange comprenant 60 % en volume de poudre de carbone d'un diamètre moyen de particules de 15 »m et de 40 % en volume de brai de houille. On chauffe ce mélange à 160°C de manière à obtenir une masse pâteuse. On forme par moulage de cette masse autour de chaque extrémité du support une surépaisseur d'environ 3 mm d'épaisseur. On chauffe progressivement l'élément jusqu'à 1200°C en atmosphère non oxydante pour carboniser le brai.
On usine ensuite la surépaisseur par meulage de manière à former un épaulement cylindrique de diamètre 25 mm et de longueur 15 mm. On étanche l'extrémité par imprégnation par du brai liquide et carbonisation. On filtre ensuite à travers le support une barbotine constituée de poudre de carbone, de résine phénolique et d'un solvant de la résine, de manière à déposer sur la surface intérieure de chacun des canaux une mince couche de carbone et de résine, et on consolide cette couche par carbonisation de la résine en atmosphère non oxydante de manière à obtenir une couche de carbone d'un diamètre moyen de pores de 0,2 »m.
On obtient ainsi un élément actif multicanal qui peut être monté en module au moyen de joints toriques, ou de joints à presse- étoupe.

### EXEMPLE V :

Sur le support tubulaire métallique de l'exemple III, on dépose une surépaisseur d'acier inoxydable de même composition que celle du support par un procédé de projection de métal fondu à la flamme (shoopage). Au moyen de caches délimitant la zone de projection, on limite à 15 mm la longueur de la surépaisseur.
On usine ensuite cette surépaisseur par tournage ou par meulage de manière à obtenir un épaulement analogue à celui de l'exemple III, et on procède ensuite de manière identique pour l'étanchage, la dépose de la couche filtrante et le montage en module.

### EXEMPLE VI :

Sur le support multicanal en alumine de l'exemple I, on forme une surépaisseur cylindrique par moulage d'un mélange ayant la composition pondérale suivante :

| | |
|---|---|
| - résine époxyde | 50 % |
| - poudre de quartz d'un diamètre moyen de particules 2 »m | 50 % |

Après polymérisation de la résine époxyde, on usine par tournage pour former un épaulement cylindrique de diamètre 34 mm et de longueur 18 mm. Après étanchage et dépose de la couche, l'élément actif est monté en module au moyen de joints toriques.

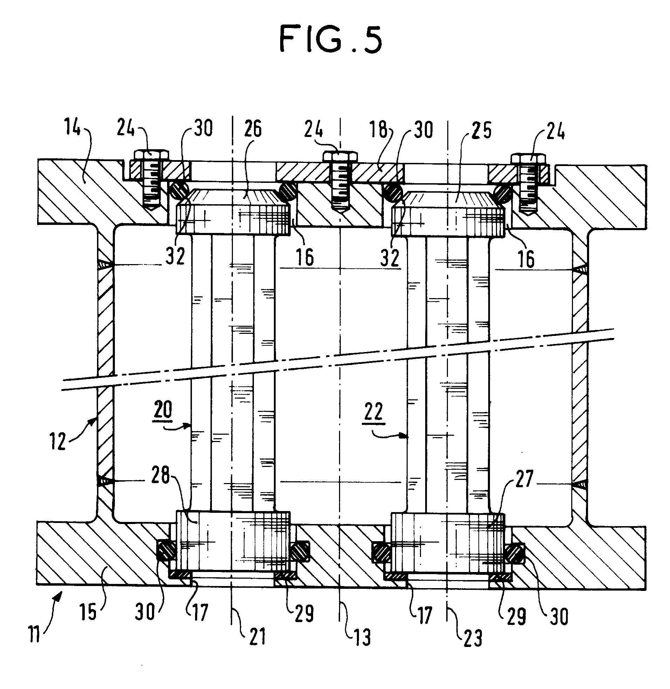

Le montage en module de tels éléments actifs peut se faire par exemple comme indiqué dans la figure 5.

Ce module 11 comporte une enveloppe 12 métallique globalement cylindrique d'axe 13 fermée par deux plaques d'extrémité 14 et 15 orthogonales à l'axe 13, présentant respectivement des ouvertures 16 et 17.

Des éléments actifs 20 et 22 d'axes respectifs 21 et 23 ont leurs extrémités destinées à être fixées dans les ouvertures 16 et 17. Les extrémités de l'élément 20 comportent des épaulements 26 et 28 selon l'invention tandis que les extrémités de l'élément 22 comporte des épaulements 25 et 27 selon l'invention.

Les épaulements 27 et 28 viennent prendre appui sur des collerettes prévues dans la plaque 15 avec des rondelles de butée intermédiaires 29. Des joints toriques 30 logés dans la plaque 15 assurent parfaitement l'étanchéité.

Au niveau des épaulements 25 et 26 terminés en troncs de cône 32 sont prévus des points toriques 30 logés dans les ouvertures 16 et bloqués longitudinalement par une plaque 18 fixée sur la plaque d'extrémité 14 par des vis 24.

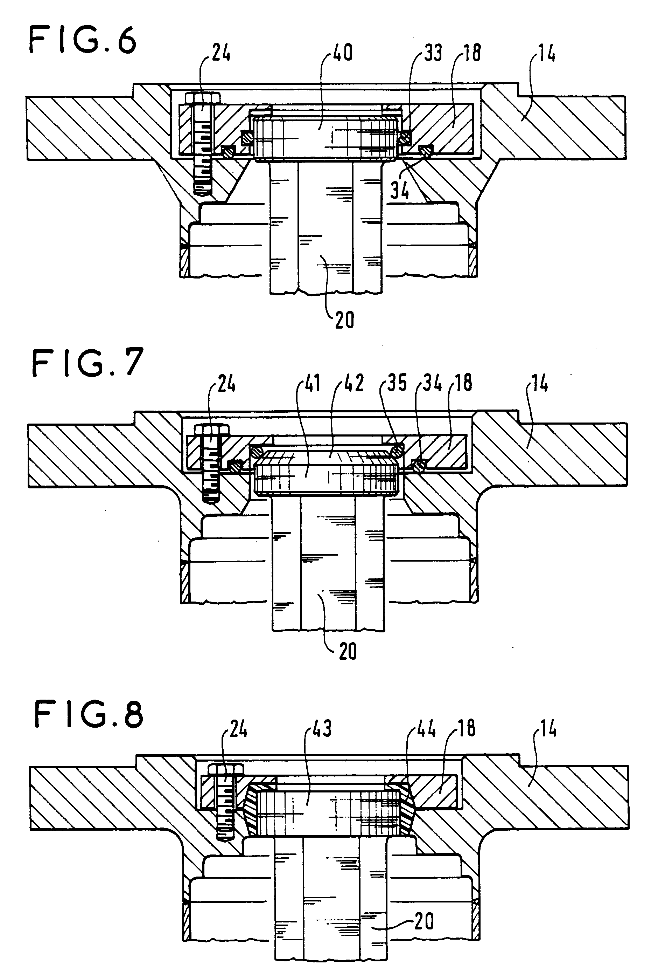

Les figures 6 à 8 montrent trois variantes de joints démontables en élastomère susceptibles de coopérer avec les épaulements selon l'invention. On retrouve dans ces trois figures les plaques 14 et 18 et un élément actif 20.

Dans la figure 6 l'élément actif 20 a un épaulement cylindrique 40 coopérant avec un joint torique 33 logé dans une cavité de la plaque 18. Un joint supplémentaire 34 est prévu entre les plaques 14 et 18.

Dans la figure 7, l'élément actif 20 a un épaulement 41 se terminant en tronc de cone 42.
Ce dernier coopère avec un joint torique 35 vis-à-vis de la plaque 18. Un joint 34 est prévu comme dans le cas de la figure 6.

La figure 8 montre un élément 20 avec un épaulement cylindrique 43 entouré, sur toute sa face cylindrique et une fraction de sa face plane, d'un joint 44.

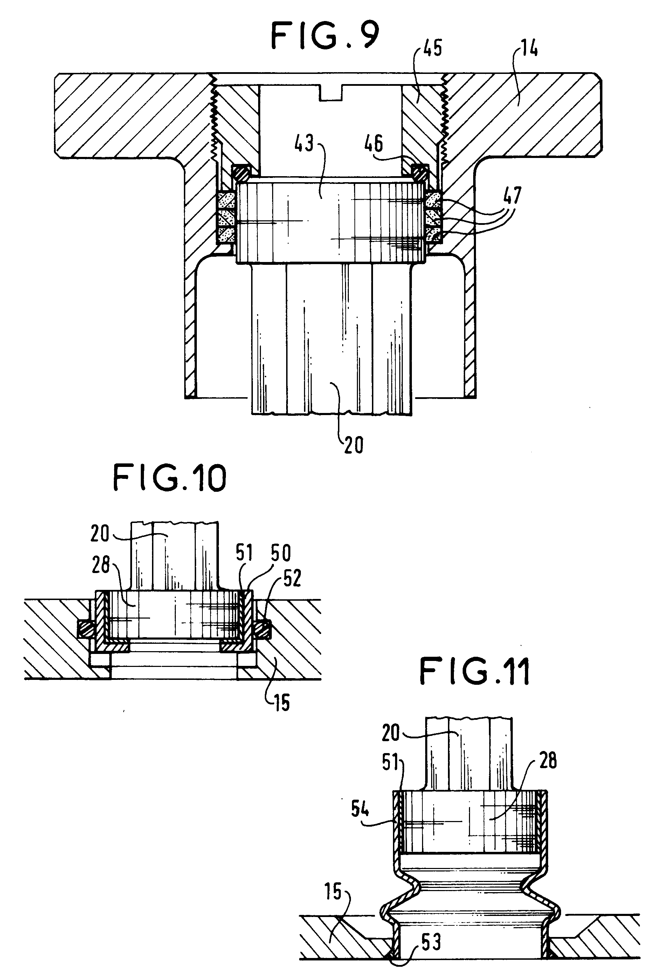

Dans la figure 9 on a illustré une variante de joint de type "presse-étoupe". L'épaulement 43 logé dans la plaque 14 coopère avec des joints 47, en fibres d'amiante ou en tresses de fibres de graphite et un joint 46 maintenus appliqués grâce à une pièce 45 vissée dans la plaque 14.

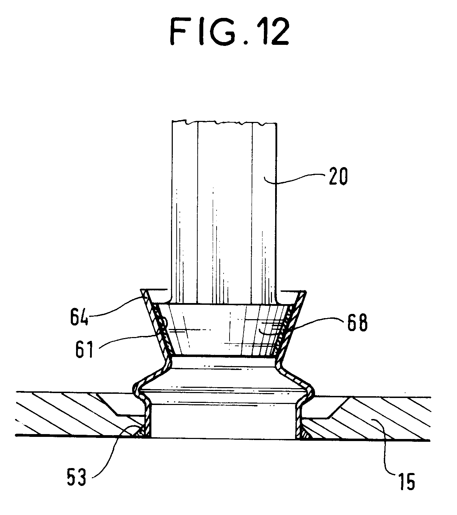

Conformément à la figure 10, on rapporte sur la surface extérieure usinée de l'épaulement 28 un embout 50 par exemple métallique, dont la forme intérieure est très voisine de la forme extérieure de l'épaulement usiné, et on fixe l'embout sur l'épaulement par une colle 51, une brasure, un ciment ou un verre fondu, ou encore une matière organique carbonisée. La fixation est alors possible car les deux surfaces en regard sont très voisines, ce qui ne serait pas réalisé en l'absence d'épaulement usiné. On réalise alors l'assemblage de l'élément actif 20 dans le module 11 au moyen d'un joint démontable 52 situé entre la surface extérieure de l'embout 50 et la surface intérieure du trou de la plaque d'extrémité 15.

Dans la figure 11, l'embout 54 a une forme de soufflet et est fixé par l'intermédiaire d'un élément 51 de la même manière que l'embout 50 sur l'épaulement 28 de l'élément actif 20 (cf figure 10). L'extrémité du soufflet est soudée en 53 à la plaque d'extrémité 15.

Dans la variante de la figure 12, l'épaulement 68 de l'élément actif 20 a été usiné en tronc de cone. Cet épaulement est solidarisé à un embout 64 en forme de soufflet par l'intermédiaire de verre fondu 61.

## Revendications

1. Procédé d'assemblage dans un module d'un élément rigide à membrane de séparation, de filtration ou de transformation catalytique, de forme extérieure sensiblement cylindrique ou prismatique, procédé selon lequel on réalise ledit élément à partir d'un support en matériau fritté, dont on étanche les extrémités et sur lequel on dépose une couche active, ledit module étant destiné à contenir au moins un élément rigide dans une enveloppe sensiblement cylindrique d'axe parallèle audit élément rigide et fermée par deux plaques d'extrémité présentant des ouvertures où l'on fixe avec des joints intermédiaires les extrémités dudit élément, caractérisé par le fait que l'on dépose en outre sur lesdites extrémités dudit élément une surépaisseur ayant une bonne liaison avec ledit support et que l'on usine ladite surépaisseur de manière à réaliser un épaulement dont la surface extérieure a une géométrie de révolution prédéterminée, d'axe identique à ou voisin de celui dudit élément.

2. Procédé d'assemblage selon la revendication 1, caractérisé par le fait que ladite matière dudit épaulement et celle dudit support sont choisies parmi une céramique, un verre, un métal, un carbone.

3. Procédé d'assemblage selon la revendication 2, caractérisé par le fait que la matière dudit épaulement et la matière dudit support sont identiques.

4. Procédé d'assemblage selon l'une des revendications précédentes, caractérisé par le fait que ladite surépaisseur est réalisée par dépôt de matière sur ledit support préalablement à l'opération d'étanchage et de dépôt de ladite couche active.

5. Procédé d'assemblage selon la revendication 4, caractérisé par le fait que, pour déposer ladite surépaisseur en verre ou en céramique sur ledit support correspondant, on coule sur ce support une barbotine contenant une poudre de verre ou de céramique, un liant organique assurant la cohésion à sec, et un solvant du liant, puis l'on sèche et l'on fritte.

6. Procédé d'assemblage selon la revendication 4, caractérisé par le fait que, pour déposer ladite surépaisseur en carbone sur un support en carbone, on coule sur ce support une suspension contenant de la poudre de carbone et une matière organique carbonisable liquide ou en solution dans un solvant, puis l'on sèche et l'on chauffe entre 800°C et 1500°C en atmosphère non oxydante.

7. Procédé d'assemblage selon la revendication 4, caractérisé par le fait que, pour déposer ladite surépaisseur en métal sur un support en métal, on coule sur ce support une suspension contenant de la poudre dudit métal, puis l'on sèche et l'on fritte.

8. Procédé d'assemblage selon l'une des revendications 5 et 7, caractérisé par le fait qu'au moment du dépôt de ladite surépaisseur, ledit support est dans un état de préfrittage et que son frittage définitif est effectué en même temps que celui de ladite surépaisseur.

9. Procédé d'assemblage selon l'une des revendications 4 à 8, caractérisé par le fait que l'opération de coulage autour des extrémités dudit support est remplacée par une opération de moulage à partir d'une masse plastique de composition similaire à celle de la barbotine, mais moins riche en liquide.

10. Procédé d'assemblage selon l'une des revendications 4 à 8, caractérisé par le fait que l'opération de coulage est remplacée par une opération de pulvérisation.

11. Procédé d'assemblage selon la revendication 1, caractérisé par le fait que l'on réalise ladite surépaisseur en une matière plastique polymérisable pouvant contenir une charge minérale que l'on moule autour des extrémités dudit support, la consolidation de ladite surépaisseur étant effectuée par la polymérisation de ladite matière plastique.

12. Procédé d'assemblage selon la revendication 2, caractérisé par le fait que ladite surépaisseur est réalisée par projection à la flamme ou au plasma de ladite matière fondue, choisie parmi une céramique, un verre et un métal.

13. Procédé d'assemblage selon la revendication 1, caractérisé par le fait que l'on rapporte sur ledit épaulement un embout dont la forme intérieure est très voisine de la forme extérieure de l'épaulement et que l'on fixe l'embout sur l'épaulement avec un matériau choisi parmi une colle, une brasure, un ciment, un verre fondu, une matière organique carbonisée.

14. Procédé d'assemblage selon la revendication 13, caractérisé par le fait que ledit embout étant métallique, il est brasé ou soudé sur la plaque d'extrémité correspondante.

15. Procédé d'assemblage selon l'une des revendications 13 et 14, caractérisé par le fait que ledit embout incorpore un soufflet métallique.

16. Procédé d'assemblage selon la revendication 1 caractérisé en ce que l'élément rigide à membrane de séparation, de filtration ou de transformation catalytique est de forme extérieure sensiblement prismatique et en ce que l'épaulement a une surface extérieure cylindrique.

## Claims

1. A method of assembling a rigid element in a module, the rigid element having a membrane for separation, filtration, or catalytic transformation purposes, the outside shape of the element being substantially cylindrical or prismatic, the method comprising making said element from a support of sintered substance, sealing the ends thereof, and depositing an active layer thereon, said module being intended to contain at least one rigid element within a shell which is substantially cylindrical about an axis parallel to said rigid element and closed by two end plates having openings to which the ends of said elements are fixed together with intervening seals, the method being characterized by the fact that an extra thickness is further deposited on said ends of said element which is bonded to said support and said extra thickness is machined in such a manner as to obtain a shoulder whose outside surface has a predetermined circularly-symmetrical shape about an axis identical or close to that of said element.

2. A method of assembly according to claim 1, characterized by the fact that said substance of said shoulder and said substance of said support are selected from: ceramic, glass, metal, and carbon.

3. A method of assembly according to claim 2, characterized by the fact that the substance of said shoulder and the substance of said support are identical.

4. A method of assembly according to any preceding claim, characterized by the fact that said extra thickness is obtained by depositing substance onto said support prior to the operations of sealing its ends and depositing said active layer.

5. A method of assembly according to claim 4, characterized by the fact that in order to deposit said extra thickness of glass or ceramic on the corresponding support, a slip is cast onto said support, said slip comprising a powder of glass or ceramic, an organic binder providing dry cohesion, and a solvent for the binder, the slip then being dried and sintered.

6. A method of assembly according to claim 4, characterized by the fact that in order to deposit said extra thickness of carbon on a carbon support, a suspension is cast onto said support, the Suspension comprising carbon powder and a carbonizable organic substance which is liquid or in solution in a solvent, after which it is dried and heated to between 800°C and 1500°C in a non-oxidizing atmosphere.

7. An assembly method according to claim 4, characterized by the fact that in order to deposit said extra thickness of metal on a metal support, a suspension is cast onto said support, the suspension containing said metal in powder form, after which the suspension is dried and sintered.

8. A method of assembly according to claim 5 or 7, characterized by the fact that when said extra thickness is deposited, said support is in a presintered state, and that it is finally sintered simultaneously with the sintering of said extra thickness.

9. An assembly method according to any one of claims 4 to 8, characterized by the fact that the casting operation around the ends of said support is replaced by a molding operation using a plastic mass similar in composition to that of the slip, but less rich in liquid.

10. A method of assembly according to any one of claims 4 to 8, characterized by the fact that the casting operation is replaced by a spraying operation.

11. A method of assembly according to claim 1, characterized by the fact that said extra thickness is made of a polymerizable plastic substance optionally containing a mineral filler which is molded around the ends of said support, with said extra thickness being consolidated by polymerizing said plastic substance.

12. A method of assembly according to claim 2, characterized by the fact that said extra thickness is made by flame or plasma spraying of said molten substance, said substance being selected from: ceramic, glass, and metal.

13. A method of assembly according to claim 1, characterized by the fact that an end piece is applied to said shoulder, the inside shape of the end piece being very close to the outside shape of the shoulder, and the end piece being fixed onto the shoulder by means of a substance selected from: glue, solder or brazing, a cement, molten glass, and carbonized organic substance.

14. A method of assembly according to claim 13, characterized by the fact that said end piece is made of metal and is soldered, brazed, or welded to the corresponding end plate.

15. A method of assembly according to claim 13 or 14, characterized by the fact that said end piece includes a metal bellows.

16. A method of assembly according to claim 1, characterized in that the rigid element, having a membrane for separation, filtration or catalytic transformation purposes, is substantially prismatic in outside shape and in that the shoulder has a cylindrical outside surface.

## Patentansprüche

1. Verfahren zum Zusammenbau eines steifen Elements, das eine Trenn-, oder Filtermembran oder eine Membran zur katalytischen Umwandlung bildet, in einem Modul, mit einer im wesentlichen zylindrischen oder prismatischen Außenform, wobei man das Element ausgehend von einem Träger aus gesintertem Material herstellt, dessen Enden man abdichtet und auf den man eine aktive Schicht aufbringt, wobei der Modul mindestens ein steifes Element in einer im wesentlichen zylindrischen Hülle enthalten soll, deren Achse parallel zu der des steifen Elements verläuft und die von zwei Endplatten verschlossen wird, die Öffnungen aufweisen, an denen mit Zwischendichtungen die Enden des Elements befestigt werden, dadurch gekennzeichnet, daß außerdem auf die Enden des Elements eine Überdicke angebracht wird, die eine gute Verbindung mit dem Träger herstellt, und daß diese Überdicke derart spanend bearbeitet wird, daß eine Schulter entsteht, deren Außenfläche eine vorbestimmte drehsymmetrische Form aufweist mit einer Achse, die mit der des Elements zusammenfällt oder ihr benachbart ist.

2. Zusammenbauverfahren nach Anspruch 1, dadurch gekennzeichnet, daß das Material der Schulter und das des Trägers aus einem Keramikmaterial, aus Glas, Metall und einem Kohlenstoff ausgewählt wird.

3. Zusammenbauverfahren nach Anspruch 2, dadurch gekennzeichnet, daß das Material der Schulter und das des Trägers identisch sind.

4. Zusammenbauverfahren nach einem der vorhergehenden Ansprüche, dadurch gekennzeichnet, daß die Überdicke vor dem Abdichtungsvorgang und vor dem Aufbringen der aktiven Schicht durch Aufbringen eines Materials auf den Träger hergestellt wird.

5. Zusammenbauverfahren nach Anspruch 4, dadurch gekennzeichnet, daß man zum Aufbringen der Überdicke aus Glas oder Keramikmaterial auf den entsprechenden Träger eine Schlämmung gießt, die ein Glas- oder Keramikpulver, ein organisches Bindemittel, das die Trockenkohäsion bewirkt, und ein Lösungsmittel für das Bindemittel enthält, und daß man dann die Überdicke trocknet und sintert.

6. Zusammenbauverfahren nach Anspruch 4, dadurch gekennzeichnet, daß man zum Aufbringen der Überdicke aus Kohlenstoff auf einen Kohlenstoff-Träger eine Suspension gießt, die Kohlenstoffpulver und ein karbonisierbares organisches Material flüssig oder in Lösung in einem Lösungsmittel enthält, und daß man die Überdicke dann trocknet und auf eine Temperatur zwischen 800°C und 1500°C unter nicht-oxidierender Atmosphäre erwärmt.

7. Zusammenbauverfahren nach Anspruch 4, dadurch gekennzeichnet, daß man zum Aufbringen der Überdicke aus Metall auf einen Metallträger eine Suspension gießt, die ein Pulver dieses Metalls enthält, und daß man dann die Überdicke trocknet und sintert.

8. Zusammenbauverfahren nach einem der Ansprüche 5 und 7, dadurch gekennzeichnet, daß zum Zeitpunkt des Aufbringens der Überdicke der Träger sich in einem Vor-Sinterzustand befindet und daß seine endgültige Sinterung gleichzeitig mit der Sinterung der Überdicke erfolgt.

9. Zusammenbauverfahren nach einem der Ansprüche 4 bis 8, dadurch gekennzeichnet, daß der Vorgang des Umgießens der Enden des Trägers durch einen Vorgang des Formgießens ausgehend von einer plastischen Masse ersetzt wird, deren Zusammensetzung der der Schlämmung ähnlich ist, aber weniger Flüssigkeit enthält.

10. Zusammenbauverfahren nach einem der Ansprüche 4 bis 8, dadurch gekennzeichnet, daß der Gießvorgang durch einen Pulverbesprühungsvorgang ersetzt wird.

11. Zusammenbauverfahren nach Anspruch 1, dadurch gekennzeichnet, daß die Überdicke aus einem polymerisierbaren Kunststoffmaterial hergestellt wird, das eine mineralische Charge aufweisen kann und das um die Enden des Trägers geformt wird, wobei die Verfestigung der Überdicke durch die Polymerisierung des Kunststoffmaterials erhalten wird.

12. Zusammenbauverfahren nach Anspruch 2, dadurch gekennzeichnet, daß die Überdicke durch Flamm-Spritzen oder Plasma-Spritzen des geschmolzenen Materials hergestellt wird, das aus einem Keramikmaterial, aus Glas und Metall ausgewählt wird.

13. Zusammenbauverfahren nach Anspruch 1, dadurch gekennzeichnet, daß an die Schulter ein Ansatzstück angesetzt wird, dessen innere Form sehr ähnlich der der Schulter ist, und daß das Ansatzstück an der Schulter mit einem Material befestigt wird, das aus einem Kleber, einer Lötnaht, einem Zement, einem geschmolzenen Glas und einem karbonisierten organischen Material ausgewählt wird.

14. Zusammenbauverfahren nach Anspruch 13, dadurch gekennzeichnet, daß das Ansatzstück, wenn es metallisch ist, auf die entsprechende Endplatte gelötet oder geschweißt wird.

15. Zusammenbauverfahren nach einem der Ansprüche 13 und 14, dadurch gekennzeichnet, daß das Ansatzstück einen Metallbalg besitzt.

16. Zusammenbauverfahren nach Anspruch 1, dadurch gekennzeichnet, daß das steife Element, das eine Trenn- oder Filtermembran oder eine Membran zur katalytischen Umwandlung bildet, eine im wesentlichen prismatische äußere Form hat und daß die Schulter eine zylindrische Außenoberfläche besitzt.
